# EUROPEAN PATENT SPECIFICATION

(11) **EP 2 987 599 B1**
(45) Date of publication and mention of the grant of the patent: **14.06.2017**
(21) Application number: 14785063.0
(22) Date of filing: 28.03.2014
(51) Int. Cl.: B29C 43/18, H01M 8/02, H01M 8/0276, H01M 8/0286, H01M 8/0282, H01M 8/0284, B29K 21/00, B29K 707/04, B29L 31/26, B29K 105/20

(54) **METHOD FOR MANUFACTURING CARBON PLATE-INTEGRATED GASKET**
VERFAHREN ZUR HERSTELLUNG EINER IN EINE CARBONPLATTE INTEGRIERTEN DICHTUNG
PROCÉDÉ DE FABRICATION DE JOINT INTÉGRÉ À UNE PLAQUE DE CARBONE

(30) Priority: 18.04.2013 JP 2013087236
(43) Date of publication of application: 24.02.2016
(73) Proprietor: NOK Corporation, Tokyo 105-8585 (JP)
(72) Inventor: SHIMAZOE Toshihiro, Fujisawa-Shi Kanagawa 251-0042 (JP); WATANABE Shigeru, Fujisawa-Shi Kanagawa 251-0042 (JP)
(74) Representative: TBK
(86) International application number: PCT/JP2014/059115
(87) International publication number: WO 2014/171298

(56) References cited:
- EP-A1- 2 278 195
- JP-A- H05 246 457
- JP-A- H08 238 624
- JP-A- 2003 225 917
- JP-A- 2011 222 245
- US-A1- 2008 166 617
- US-A1- 2009 101 276
- US-B1- 6 337 120

## Description

### BACKGROUND OF THE INVENTION

### Field of the Invention

The present invention relates to a method of manufacturing a carbon plate-integrated gasket according to the preamble of claim 1.

### Description of the Conventional Art

A generic method of manufacturing a carbon plate-integrated gasket according to the preamble of claim 1 is shown in Patent Document 1. Further methods of manufacturing are shown in Patent Documents 2 to 4.

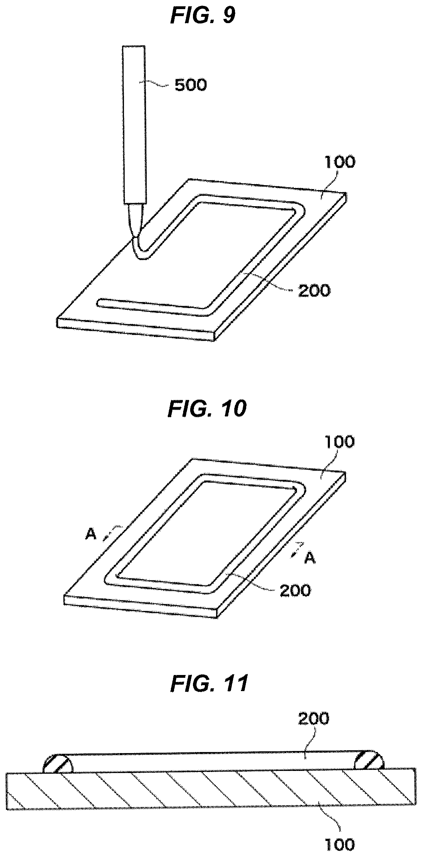

Conventionally, as a method for manufacturing a carbon plate-integrated gasket, there has been proposed a cure-in-place gasket (CIPG) which is manufactured by directly applying an uncured liquid rubber to a surface of a carbon plate 100 by a dispenser 500 and curing the uncured liquid rubber, as shown in Figs. 9 and 10.

However, since a seal shape (a height and a width of the seal) after being applied greatly affects a sealing performance, an application control at a high precision has been requested in a sealing agent applying process.

Further, the seal shape obtained by the sealing agent applying process has been limited to a simple shape having a circular arc cross sectional shape as shown in Fig. 11, and it has been extremely hard to form a lip shape having a sharp leading end.

Further, since a molding pressure is not applied, there has been brought about a problem that a material physical property is hard to be output in comparison with a gasket which is manufactured by a normal compression molding or injection molding.

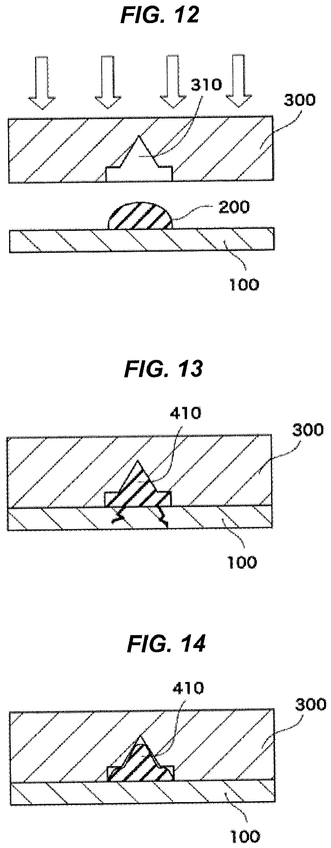

Consequently, as shown in Fig. 12, there has been proposed a method which applies an uncured liquid rubber by a cure-in-place gasket (CIPG), thereafter compresses the uncured liquid rubber under an uncured state by using a molding metal mold 300 in which a molding space (a cavity) 310 is engraved so as to form an optional seal shape, and thermally cures.

However, in the case that an amount of an uncured seal protrusion 200 is excess in comparison with a capacity of the molding space (the cavity) 310 at the compressing time in the molding metal mold 300, a high filling state is established, and there is brought about a problem that a weak carbon plate 100 gets broken by the molding pressure, as shown in Fig. 13.

On the other hand, in the case that an amount of the uncured seal protrusion 200 falls short in comparison with a capacity of the molding space (the cavity) 310 at the compressing time by the molding metal mold 300, filling short is caused, and a problem that an aimed lip shape can not be obtained is invited.

### PRIOR ART DOCUMENTS

### Patent Documents

Patent Document 1: US 2009/101276 A1
Patent Document 2: EP 2 278 195 A1
Patent Document 3: US 2008/166617 A1
Patent Document 4: US 6 337 120 B1
Patent Document 5: JP 2006 029376 A
Patent Document 6: JP 2000 320678 A

### SUMMARY OF THE INVENTION

### Problem to be Solved by the Invention

The present invention is made by taking the above points into consideration, and an object of the present invention is to provide a method of manufacturing a carbon plate-integrated gasket, which can precisely obtain a gasket having an optional lip shape without damaging a carbon plate in formation of the carbon plate-integrated gasket by a cure-in-plate gasket (CIPG), and has a good stock utilization in a state in which a good material property is maintained.

### Means for Solving the Problem

The object is achieved by a method of manufacturing having the features of claim 1. Further advantageous developments of the invention are set out in the dependent claims.

In order to achieve the object mentioned above, according to the present invention, there is provided a method of manufacturing a carbon plate-integrated gasket having a gasket with a lip shape portion, the method comprising the steps of:
manufacturing an uncured seal protrusion by applying an uncured liquid rubber to a surface of a carbon plate, and
next compressing and curing the seal protrusion between a molding metal mold and the carbon plate,
wherein a burr reservoir portion is provided between the molding metal mold and the carbon plate so as to be communicated with a molding space via a rubber squeezing portion, the burr reservoir portion being provided for discharging a surplus rubber of the seal protrusion from the molding space of the gasket.

### Effect of the Invention

The present invention achieves effects described below.

According to the method of manufacturing the carbon plate-integrated gasket on the basis of the invention described above, the burr reservoir portion for discharging the surplus rubber in the seal protrusion from the molding space of the gasket is provided between the molding metal mold and the carbon plate, so as to be communicated with the molding space via the rubber squeezing portion. As a result, in the formation of the carbon plate-integrated gasket by the cure-in-plate gasket (CIPG), the gasket having the optional lip shape can be obtained precisely without damaging the carbon plate, and the stock utilization is good in a state in which the good material property is maintained.

Preferably, according to a method of manufacturing a carbon plate-integrated gasket on the basis of the invention described above, a groove portion storing a main body portion of the gasket is formed in the carbon plate, and the burr reservoir portion is provided in the carbon plate side. As a result, burr treatment is not necessary, and bonding of the gasket to the carbon plate is more firmly formed.

Preferably, according to a method of manufacturing a carbon plate-integrated gasket on the basis of the invention described above, a plurality of burr reservoir portions and a plurality of rubber squeezing portions are provided. As a result, it is possible to more securely carry out the burr stop.

### Brief Description of the Drawings

Fig. 1 is a perspective view showing a state in which a seal protrusion is formed by applying an uncured liquid rubber to a surface of a carbon plate while using a dispenser;
Fig. 2 is a cross sectional view showing a previous process which compresses the seal protrusion manufactured in Fig. 1 by a molding metal mold of a first aspect according to the present invention;
Fig. 3 is a cross sectional view showing a state in which the seal protrusion is compressed by the molding metal mold from the state in Fig. 2;
Fig. 4 is a cross sectional view sowing a state in which a carbon plate-integrated gasket is taken out of the molding metal mold in Fig. 3;
Fig. 5 is a view showing in the same manner as Fig. 2 a previous process which compresses the seal protrusion manufactured in Fig. 1 by a molding metal mold of a second aspect according to the present invention;
Fig. 6 is a cross sectional view showing a state in which the seal protrusion is compressed by the molding metal mold from the state in Fig. 5;
Fig. 7 is a cross sectional view sowing a state in which a carbon plate-integrated gasket is taken out of the molding metal mold in Fig. 6;
Fig. 8 is a view showing in the same manner as Fig. 3 a state of being compressed by a molding metal mold of a third aspect according to the present invention;
Fig. 9 is a perspective view showing a state in which a seal protrusion is formed by applying an uncured liquid rubber to a surface of a carbon plate while using a dispenser;
Fig. 10 is a perspective view showing a carbon plate-integrated gasket according to a prior art in which the seal protrusion is formed on the surface of the carbon plate in Fig. 9;
Fig. 11 is a cross sectional view along a line A-A in Fig. 10;
Fig. 12 is a cross sectional view showing a previous process which compresses the seal protrusion manufactured in Fig. 10 by a molding metal mold according to the prior art;
Fig. 13 is a cross sectional view showing a defect in the case of forming by the molding metal mold in Fig. 12; and
Fig. 14 is a cross sectional view showing the other defect in the case of forming the molding metal mold in Fig. 12.

### Mode for Carrying Out the Invention

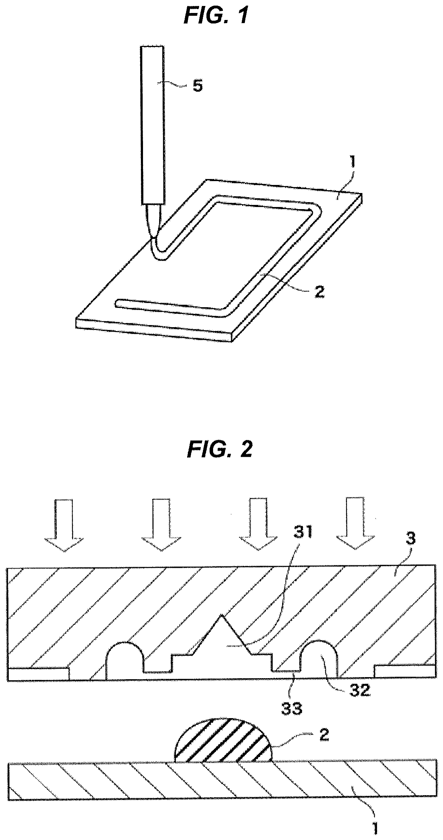

A description will be given below of the best mode for carrying out the invention on the basis of Figs. 1 to 8.

In a method of manufacturing a carbon plate-integrated gasket which is manufactured by a molding metal mold of a first aspect according to the present invention, an uncured seal protrusion 2 is manufactured by applying a liquid rubber such as an uncured liquid silicone elastomer to a surface of a carbon plate 1 by a dispenser 5.

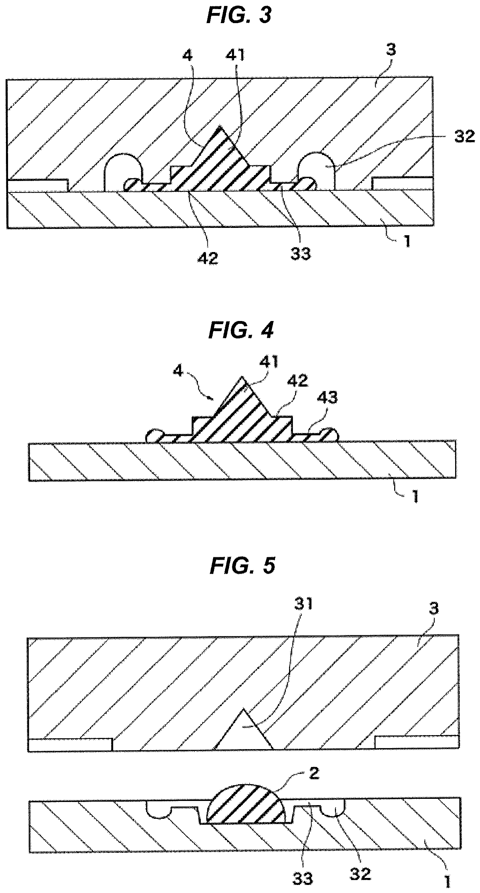

Next, the seal protrusion 2 is compressed and cured as shown in Fig. 3 in relation to the carbon plate 1 by using a molding metal mold 3 shown in Fig. 2.

Next, the molding metal mold 4 is taken out. Then, a carbon plate-integrated gasket having a gasket 4 with a lip shape portion 41 can be formed on a surface of the carbon plate 1 as shown in Fig. 4.

Further, a burr reservoir portion 32 for discharging surplus rubber of the seal protrusion 2 from a molding space 31 of the gasket 4 is formed in the molding metal mold 3 so as to be communicated with the molding space 31 via a rubber squeezing portion 33.

As a result, in formation of the carbon plate-integrated gasket by a cure-in-place gasket (CIPG), the gasket having an optional lip shape can be obtained precisely without damaging the carbon plate 1, and a stock utilization is good in a state in which a good material property is maintained.

The burr reservoir portion 32 and the rubber squeezing portion 33 are provided with symmetrical shapes in both sides so as to pinch the gasket 4.

A gap between the surface of the molding metal mold 3 and the surface of the carbon plate 1 is set to a range between 0.05 and 0.1 mm, in the rubber squeezing portion 33.

If the gap is too large, the rubber flows out to the burr reservoir portion 32 side before the rubber is filled into the molding space 31. As a result, a problem that an expected shape of the gasket 4 can not be obtained is generated due to an air intrusion into the gasket 4 or a filling short.

On the other hand, if the gap is too small, the surplus rubber can not smoothly flow out to the burr reservoir portion 32 side. As a result, the pressure within the molding space 31 excessively rises, and a risk that the carbon plate 1 is broken is invited.

Further, a burr 43 which is necessarily generated at the forming time is not necessarily removed as long as the burr has no problem functionally, however, if the burr is of a problem, the burr 43 may be removed by a post treatment.

Further, the used liquid rubber can employ various types of liquid rubbers such as a heat cured type liquid rubber, a room temperature cured type liquid rubber and an ultraviolet cured type liquid rubber.

Next, a description will be given of a carbon plate-integrated gasket which is manufactured by a molding metal mold according to a second aspect, on the basis of Fig. 5, 6 and 7.

The carbon plate-integrated gasket manufactured by the molding metal mold according to the first aspect described previously is structured such that the burr reservoir portion 32 and the rubber squeezing portion 33 for discharging the surplus rubber of the seal protrusion 2 from the molding space 31 of the gasket 4 are provided in the molding metal mold 3 side, however, the second aspect is different from the first aspect in a point that the burr reservoir portion 32 and the rubber squeezing portion 33 are provided in the carbon plate 1 side, and the groove portion 11 receiving a part of the main body portion 42 of the gasket 4 is provided in the carbon plate 1 side.

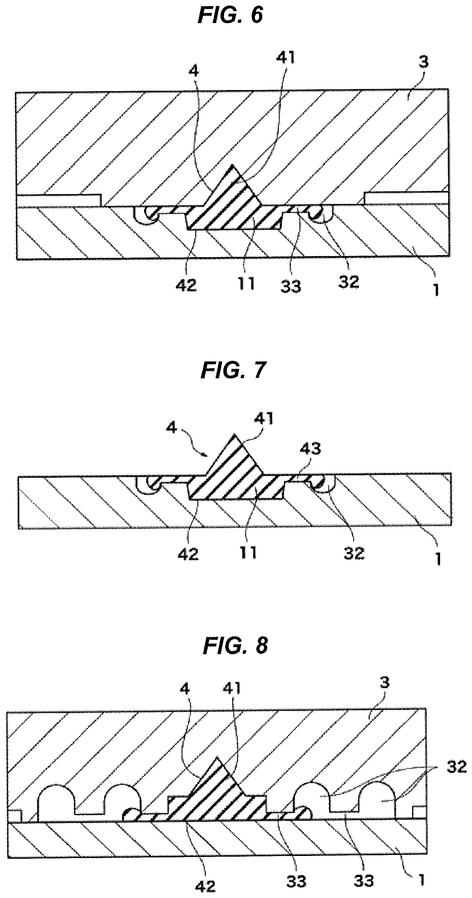

In a carbon plate-integrated gasket formed via the forming processes in Figs. 5 and 6 and shown in Fig. 7, since the burr 43 is formed on the same plane as the surface of the carbon plate 1, it is not necessary to remove the burr 43 by a post treatment.

Further, since a part of the main body portion 42 of the gasket 4 is formed into a shape which is received within the groove portion 11 provided in the carbon plate 1 side, a sufficient bonding strength between the gasket 4 and the carbon plate 1 can be obtained on the basis of an anchor effect without necessity of using an adhesive agent.

Next, a description will be given of a carbon plate-integrated gasket which is manufactured by a molding metal mold according to a third aspect, on the basis of Fig. 8.

A different point from the molding metal mold according to the first aspect shown in Fig. 3 exists in a point that the burr reservoir portions 32 and the rubber squeezing portions 33 are provided in two rows (two stages).

Since the number of the burr reservoir portions 32 and the rubber squeezing portions 33 is increased as mentioned above, it is possible to more
securely stop the burr, and it is possible to effectively avoid the intrusion into the gasket 4 and the filling short.

Further, the present invention is not limited to the best mode for carrying out the invention mentioned above, but can of course employ the other various structures falling into the scope of the present invention defined by the claims.

### Industrial Applicability

The invention can be effectively utilized as a separator for a fuel battery.

### Description of Reference Numeral

- 1: carbon plate
- 2: seal protrusion
- 3: molding metal mold
- 4: gasket
- 5: dispenser
- 11: groove portion
- 31: molding space
- 32: burr reservoir portion
- 33: rubber squeezing portion
- 41: lip shape portion
- 42: main body portion
- 43: burr

## Claims

1. A method of manufacturing a carbon plate-integrated gasket having a gasket (4), the method comprising the steps of:
manufacturing an uncured seal protrusion (2) by applying an uncured liquid rubber to a carbon plate (1), and
next compressing and curing said seal protrusion (2) between a molding metal mold (3) and said carbon plate (1); **characterized in that**
said uncured liquid rubber is applied to a plate surface of said carbon plate (1), and a burr reservoir portion (32) is provided between said molding metal mold (3) and said carbon plate (1) so as to be communicated with a molding space (31) via a rubber squeezing portion (33), the burr reservoir portion (32) being provided for discharging a surplus rubber of said seal protrusion (2) from said molding space (31) of said gasket (4), wherein
a lip shape portion (41) is formed in said gasket (4) by compressing and curing said seal protrusion (2) between said plate surface and said molding metal mold (3).

2. The method of manufacturing the carbon plate-integrated gasket according to claim 1, wherein a groove portion (11) storing a main body portion (42) of said gasket (4) is formed in said carbon plate (1), and said burr reservoir portion (32) is provided in said carbon plate (1) side.

3. The method of manufacturing the carbon plate-integrated gasket according to claim 1 or 2, wherein a plurality of said burr reservoir portions (32) and a plurality of said rubber squeezing portions (33) are provided.

## Patentansprüche

1. Verfahren zum Herstellen einer in einer Kohlenstoffplatte integrierten Dichtung, die eine Dichtung (4) hat, wobei das Verfahren die folgenden Schritte aufweist:
Herstellen eines ungehärteten Dichtungsvorsprungs (2) durch Auftragen eines ungehärteten flüssigen Gummis auf eine Kohlenstoffplatte (1), und
als nächstes Zusammenpressen und Aushärten des Dichtungsvorsprungs (2) zwischen einer Metallform (3) zum Pressformen und der Kohlenstoffplatte (1); **dadurch gekennzeichnet, dass**
der ungehärtete flüssige Gummi auf eine Plattenoberfläche der Kohlenstoffplatte (1) aufgebracht wird und ein Gratspeicherabschnitt (32) zwischen der Metallform (3) zum Pressformen und der Kohlenstoffplatte (1) vorgesehen ist, um mit einem Formraum (31) über einen Gummiquetschabschnitt (33) verbunden zu sein, wobei der Gratspeicherabschnitt (32) zum Abführen eines Überschussgummis des Dichtungsvorsprungs (2) aus dem Formraum (31) der Dichtung (4) vorgesehen ist, wobei
ein Lippenformabschnitt (41) in der Dichtung (4) ausgebildet wird, indem der Dichtungsvorsprung (2) zwischen der Plattenoberfläche und der Metallform (3) zum Pressformen zusammengepresst und ausgehärtet wird.

2. Verfahren zum Herstellen einer in einer Kohlenstoffplatte integrierten Dichtung nach Anspruch 1, wobei ein Nutabschnitt (11), der einen Hauptkörperabschnitt (42) der Dichtung (4) aufnimmt, in der Kohlenstoffplatte (1) ausgebildet ist, und der Gratspeicherabschnitt (32) auf der Seite der Kohlenstoffplatte (1) vorgesehen ist.

3. Verfahren zum Herstellen einer in einer Kohlenstoffplatte integrierten Dichtung nach Anspruch 1 oder 2, wobei eine Vielzahl der Gratspeicherabschnitte (32) und eine Vielzahl der Gummiquetschabschnitte (33) vorgesehen sind.

## Revendications

1. Procédé pour fabriquer un joint intégré à une plaque de carbone ayant un joint (4), le procédé comprenant les étapes suivantes :
fabriquer une saillie de joint d'étanchéité (2) non durcie en appliquant un caoutchouc liquide non durci sur une plaque de carbone (1), et
comprimer et faire durcir ensuite ladite saillie de joint d'étanchéité (2) entre un moule métallique (3) de moulage et ladite plaque de carbone (1) ; **caractérisé en ce que**
ledit caoutchouc liquide non durci est appliqué sur une surface de plaque de ladite plaque de carbone (1), et une partie de réservoir à bavures (32) est prévue entre ledit moule métallique (3) de moulage et ladite plaque de carbone (1) afin d'être en communication avec un espace de moulage (31) via une partie de compression de caoutchouc (33), la partie de réservoir à bavures (32) étant prévue pour décharger un surplus de caoutchouc de ladite saillie de joint d'étanchéité (2) dudit espace de moulage (31) dudit joint (4), dans lequel
une partie en forme de lèvre (41) est formée dans ledit joint (4) en comprimant et en faisant durcir ladite saillie de joint d'étanchéité (2) entre ladite surface de plaque et ledit moule métallique (3) de moulage.

2. Procédé pour fabriquer le joint intégré à une plaque de carbone selon la revendication 1, dans lequel une partie de rainure (11) stockant une partie de corps principal (42) dudit joint (4) est formée dans ladite plaque de carbone (1), et ladite partie de réservoir à bavures (32) est prévue du côté de ladite plaque de carbone (1).

3. Procédé pour fabriquer le joint intégré à une plaque de carbone selon la revendication 1 ou 2, dans lequel une pluralité desdites parties de réservoir à bavures (32) et une pluralité desdites parties de compression de caoutchouc (33) sont prévues.
